# EUROPEAN PATENT APPLICATION

(11) **EP 3 745 345 A1**
(43) Date of publication of application: **02.12.2020**
(21) Application number: 18815500.6
(22) Date of filing: 11.05.2018
(51) Int. Cl.: G06Q 50/10, G06F 21/32

(54) **TICKETING MANAGEMENT SYSTEM AND PROGRAM**

(30) Priority: 23.01.2018 JP 2018008642
(71) Applicant: Rococo Co., Ltd., Chuo-ku, Osaka-shi, Osaka 542-0086 (JP)
(72) Inventor: SHIMIZU, Tomoyuki, Tokyo 1050014 (JP); NISHISAKO, Tetsuhiko, Tokyo 1050014 (JP)
(74) Representative: Hoffmann Eitle
(86) International application number: PCT/JP2018/018325
(87) International publication number: WO 2019/146136

(57) **Abstract**

PROBLEMS TO BE SOLVED

In a prior art system, it was not possible to prevent wrongful re-sale or transfer to third parties via a terminal, and effort and time are required for authentication by face recognition, as is the case with paper tickets.

MEANS FOR SOLVING THESE PROBLEMS

A ticketing management system 1 having a server 2, a user terminal 3, and a code reader 4. The server 2 has a code issuer configured to issue a unique code 5 when there is a match between biodata that the user has previously registered and biodata that the user registers at an event venue. Additionally, the server 2 has a user authenticator that employs the code reader 4 to authenticate the user as the authentic ticket purchaser by reading the unique code displayed on the user terminal 3.

ADVANTAGEOUS EFFECTS

To make it possible to reliably prevent wrongful activity such as a wrongful re-sale of a terminal or ticket counterfeiting and re-sale, and to enable a speedy admission process, while using highly accurate biometrics.

## Description

### TECHNICAL FIELD

The present invention relates to a ticketing management system that uses biometrics to determine if a person is the authentic purchaser of the ticket, and the present invention also relates to a program used in that system.

### BACKGROUND ART

Typically, a spectator entering a venue for an event such as a concert, sports competition, or the like, has made an advance purchase of a paper ticket on which is printed information such as a description of the event, date, and venue, and the spectator hands the ticket to an attendant at an entrance gate at the venue. Upon confirming the validity of the paper ticket, the attendant tears the ticket in half and allows the spectator to enter. This operation is known as "ticket collecting."

However, there is a problem in handling paper tickets, in that it takes effort and time to confirm the validity of the ticket and to tear it in half. Moreover, in order to speed up the ticket collecting operation, it is necessary to increase the number of attendants, which increases personnel costs.

In addition, since paper tickets can easily be resold to another person, there is a problem in that it is difficult to prevent wrongful activity by scalpers who buy up tickets for events such as concerts by popular artists with the aim of reselling them at high prices.

Accordingly, systems have been proposed for issuing electronic tickets in a digital format instead of paper tickets. For example, in the case of the system described in Patent Reference 1, a ticket purchaser uses the Internet to procure an electronic ticket which is received on a terminal such as a Smart Phone. Then, at the event venue, the ticket purchaser displays an image of the electronic ticket on a screen of the terminal, obtains authentication, and once the electronic ticket has been processed on the screen by what is called "electronic ticket collecting," the electronic ticket cannot be used again, and the purchaser is allowed to enter.

However, although an electronic ticket is used in the system according to Patent Reference 1, there is a problem in that it is difficult to prevent wrongful resale or transfer to third parties via each terminal that displays electronic tickets.

Face recognition systems are publicly-known method for authenticating the identity of a particular individual. For example, in the case of the theme park of Non-Patent Reference 1, when a purchaser of an annual passport passes through an entrance gate for the first time, a record is made of the individual's facial photograph, and every time the individual enters after that, a face recognition system compares the facial data.

However, the system according to Non-Patent Reference 1 has the same problem found in paper tickets, in that an attendant at an entrance gate has to perform a large number of operations, taking effort and time to process gate entries, because the initial recording of the facial photograph is made at the entrance gate, and the facial data is compared at the entry gate every time after that.

In addition, in the case of a system that uses electronic tickets as in Patent Reference 1, there are instances in which it is difficult to read the data displayed on the terminal, depending on the light surrounding the terminal, and this can make an admission process troublesome.

A variety of environments must be taken into consideration for event venues. For example, fireworks staging areas are dark environments, sports arenas are environments exposed to direct sunlight, art exhibition halls are quiet environments, university festivals are noisy environments, and there are also environments in which water can adhere to the screen of the terminal due to rain, snow, or fog. Accordingly, there developed a need for a ticketing management system capable of smoothly performing a highly accurate authentication process and reliably preventing wrongful activity, without delaying gate entry processing, regardless of the type of environment.

### PRIOR ART REFERENCES

### PATENT REFERENCES

Patent Reference 1: Japanese Patent Application Kokai Publication No. 2014-149556.

### NON-PATENT REFERENCES

Non-Patent Reference 1: Web site pertaining to a Face Certification System for an Annual Pass issued by Universal Studios Japan <https://www.usj.co.jp/ticket/apass/facecertification.html> from a search performed on December 26, 2017.

### SUMMARY OF THE INVENTION

### PROBLEMS TO BE SOLVED BY THE INVENTION

One problem to be solved by the present invention is that in a prior art electronic ticket issuing system, it was impossible to prevent wrongful resale or transfer to third parties via a terminal device. Another problem to be solved by the present invention is that in a prior art face recognition system, effort and time were required to process gate entries, as was likewise the case with paper tickets.

### MEANS FOR SOLVING THESE PROBLEMS

The object of the present invention is to solve the above problems by providing a ticketing management system and program that are able to reliably prevent wrongful resale or wrongful transfer via a terminal, and also to enable an efficient admission process, while employing highly accurate biometrics.

The present invention is a ticketing management system comprising a server, a user terminal, and a code reader to enable an authentication of electronic tickets, wherein the server comprises a code issuer configured to compare user biodata registered in advance with user's biodata registered at a venue and issues a unique code when there is a match between them, and a user authenticator configured to operate the code reader to authenticate a user as the true ticket purchaser.

The ticketing management system according to the present invention has, for example, a user terminal carried by a user who has purchased an electronic ticket, a code reader owned by the company that sponsors the event, and a server that has at least a code issuer and a user authenticator.

The code issuer is a means for the server to issue a unique code to the user terminal when a program on the server determines that biodata such as a face, voiceprint, fingerprint or the like that the user registered in advance when the user first registered as the user or when the user requested the ticket, matches with biodata registered on the day of the event or registered before entering the event venue, such as at a predetermined time prior to the starting time of the event.

The user authenticator is a means for the server to authenticate the user as the true ticket purchaser when a program on the server determines that the unique code is the correct unique code when an attendant representing the event sponsor uses the code reader to read the unique code displayed on the user terminal, and determines that the unique code is the correct unique code.

Therefore, the present invention makes it possible to prevent a wrongful entry to a venue by not issuing a unique code, because even if the user terminal is used for a wrongful resale, the code issuer determines that the biodata registered in advance does not match the biodata registered at the event venue.

In addition, the present invention enables an efficient admission process, even when highly accurate biometrics are employed, because the user does not register and compare facial photographs at the entrance gate, but instead, the user is able to use the time while approaching the entrance gate to activate the code issuer in advance, so as to display the unique code in the user terminal.

### ADVANTAGEOUS EFFECTS OF THE INVENTION

The present invention makes it possible to reliably prevent wrongful activity such as the wrongful resale of a terminal or ticket counterfeiting and resale, including ticket transfer, and also results in outstanding effects such as a speedy admission process, even when highly accurate biometrics are employed.

### BRIEF DESCRIPTION OF THE DRAWINGS

FIG. 1 is a schematic drawing of the ticketing management system according to the present invention.
FIG. 2 is a flow chart describing a personal data registration process in the ticketing management system according to the present invention.
FIG. 3 is a flow chart describing a ticket purchasing process in the ticketing management system according to the present invention.
FIG. 4 is a flow chart describing a ticket display process in the ticketing management system according to the present invention.
FIG. 5 is a flow chart describing a venue admission process or re-admission process in the ticketing management system according to the present invention.
FIG. 6 is a flow chart describing a venue exit process in the ticketing management system according to the present invention.
FIG. 7 is a drawing illustrating an example of an advantageous effect of the present invention.
FIG. 8 is a drawing illustrating an example of another advantageous effect of the present invention.
FIG. 9 is a flow chart illustrating a process of modifying the unique code for each predetermined interval of time.
FIG. 10 is a drawing illustrating a distribution function in the ticketing management system according to the present invention.
FIG. 11 is a flow chart illustrating a distribution process in the ticketing management system according to the present invention.
FIG. 12 is a flow chart illustrating a process whereby an event sponsor selects and designates an authentication method.

### EMBODIMENT OF THE INVENTION

The object of the present invention is to provide a ticketing management system and program that are able to reliably prevent wrongful resale or transfer via a terminal, and to enable an efficient admission process while employing highly accurate biometrics. This object is achieved by employing a server that has a code issuer configured to compare user biodata registered in advance with user's biodata registered at a venue and issues a unique code when there is a match between them, and a user authenticator configured to operate the code reader to read the unique code displayed on the user terminal to thereby authenticate the user as the true ticket purchaser.

### EXAMPLES

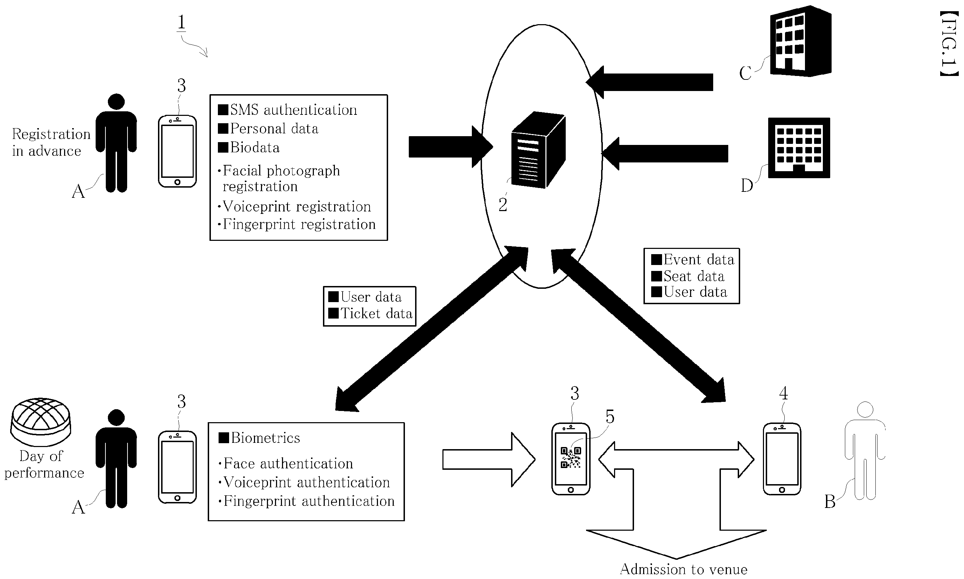

In the following, an embodiment of the present invention is described in detail, based on an examples illustrated in FIG. 1 to FIG. 12. The present example is a complete ticketing management system that is able to coordinate a user A who purchases a concert ticket, a concert event sponsor B (referred to below as "sponsor B" which includes an operator hired to manage venue admissions), a ticket sales company C, and a fan club D.

In FIG. 1, Reference Numeral 1 is a ticketing management system of the present example, having a server 2 in which is installed a CPU, memory, and secondary memory, as well as a database in which is stored user data including user biodata and personal data and a program for executing the process described below, a user terminal 3 such as a Smart Phone, a tablet, or the like owned by the user A, and a code reader 4 owned by the sponsor B. The code reader 4 may be a tablet terminal or a personal computer to which is connected a hand-held scanner. The server 2 is connected to the user terminal 3 and to the code reader 4 via the Internet, making it possible to mutually transmit and receive data.

The ticketing management system 1 provides to the user A functions such as registration of user data, ticket ordering, purchasing, and payment/settlement, and it provides to the sponsor B functions such as ticket authentication at the time of admission to a concert hall. The ticketing management system 1 is connected via the Internet to the ticket sales company C and to the personal computer of the fan club D, and provides to the ticket sales company C and the fan club D the functions of referencing or renewing data such as ticket purchasing data stored in a database of the server 2 or fan club member data.

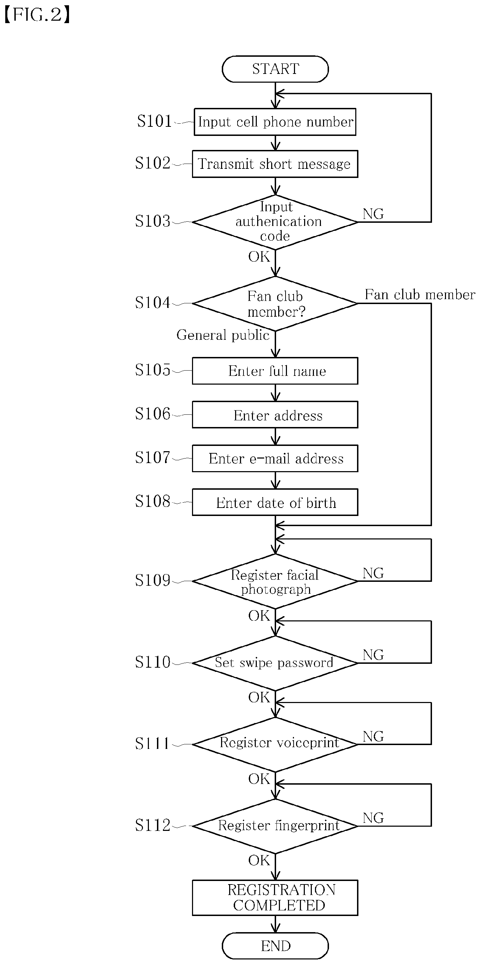

FIG. 2 is a flow chart describing a personal data registration process according to the present example. The user A activates a dedicated application installed in advance, and user registration makes it possible to use the system service. When the user A enters his/her own cell phone number (S101), the server 2 transmits a short message displaying an authentication code to the cell phone number it receives (S102). If the user A, who received the short message, has correctly entered the authentication code, then SMS authentication is successful (S103).

After completing SMS authentication, user A is asked if he/she is registered as an ordinary member, or if registration has already been completed for the fan club D (S104). If he/she is an ordinary member, then the user A enters personal data such as name (S105), address (S106), e-mail address (S107), and date of birth (S108). If he/she is registered as a fan club member, then these data have already been registered with the club, so the user A can omit entering personal data by simply entering the name of the club and the member number.

The present example is a hybrid biometrics system with enhanced reliability resulting from registering at least two types of biodata. After registration of personal data has been completed, the user A takes his/her facial photograph and registers it (S109), sets a swipe password (S110), registers a spoken voiceprint (S111), and registers a fingerprint (S112). Taking of the photograph, recording the voice, and scanning the fingerprint can be easily accomplished by using functions such as a camera, microphone, and scanner installed in the user terminal 3.

The swipe password can be an orbital pattern joining nine points, for example, into any desired line, and registered as a password. The present example uses a swipe password, so there is an advantage in that the user A does not have to take the trouble to input letters or numbers when a password is required.

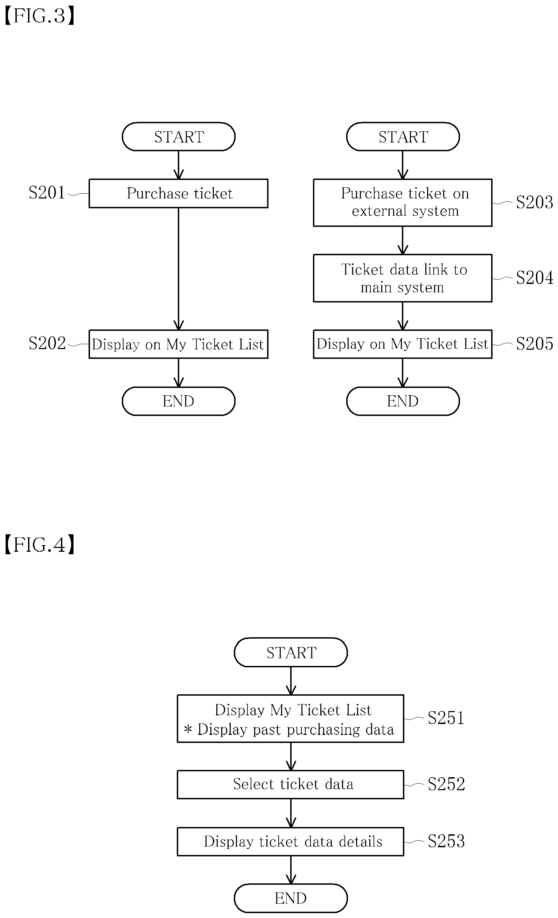

FIG. 3 is a flow chart describing a ticket purchasing process in the ticketing management system according to the present example. Once user registration is completed, the user A searches for a concert for which he/she wishes to purchase a ticket, using a screen of a dedicated application of the user terminal 3, and if the searched for data is found, it is selected on the screen, thereby executing the ticket purchasing process (S201). After ordering the ticket, electronic payment and settlement are completed, and the ticket is displayed in its entirety in My Ticket List (S202). If the user A orders multiple tickets at one time, the tickets are easily managed by referring to My Ticket List.

The ticketing management system 1 shares API (Application Programming Interface) specifications with an external system. Accordingly, the user A is able to purchase tickets with an external system such as a website of a ticket sales company C or a terminal installed in a convenience store (S203).

The user A may simply select a name of a ticket sales company on a screen, input a ticket receipt number and a ticket control number, and the server 2 sends an inquiry to the external system, and receives detailed data about the ticket (S204). Once a connection to the external system has been established, the ticket is displayed in My Ticket List (S205) in the same manner as a ticket purchased using the main system.

The ticketing management system 1 thus comprises a system wherein the server 2 has an account manager for electronic ticket payment and settlement, together with an external system connector configured to receive ticket data from the external system through which the user A purchased the ticket.

This makes it easier for the user A to use this system, because it increases the means and sites where tickets can be purchased.

FIG. 4 is a flow chart describing a ticket display process in the ticketing management system according to the present example. After finalizing the purchase and payment/settlement using this system, or after a purchase using an external system, the ticket is displayed in My Ticket List, together with past purchases (S251). The user A selects the desired ticket from My Ticket List (S252) and is able to authenticate the details of the ticket data (S253).

The display controller (My Ticket List) makes it possible to review ticket purchasing requests, lottery results, usage history, as well as information such as concert dates, venues, artists' names, seats, prices, and the like. These data are stored in the database of the server 2.

The ticketing management system 1 according to the present example thus comprises a system wherein the server 2 has a display controller (My Ticket List) configured to display on a user terminal 3 historical data on electronic tickets that the user A has previously purchased.

Accordingly, the user A is able to use the user terminal 3 to manage all of the data pertaining to the ticket.

Following is a description of a code issuer and a user authenticator according to the present example. As shown in FIG. 1, the code issuer is a means for issuing a unique code 5 formed from a QR Code (Registered Trademark) in the form of a 2-dimensional code. The code issuer issues the unique code 5 to the user terminal 3 when it is able to confirm with biometrics that the user A is the authentic user.

As shown in the location indicating "Pre-registration" in FIG. 1, when the user A registers as the user, or when the user A purchases the desired ticket not only at the time of user registration, the user A pre-registers biodata such as the face, voiceprint, fingerprint etc. prior to the day of the event. Specific examples of this pre-registration are given in the flowchart of FIG. 2 (S109, S111, and S112).

As shown in the location indicating "Performance date" in FIG. 1, the user A registers biodata such as face, voiceprint, fingerprint, etc. on the day of the event or just before entering the event venue, such as an hour before the event begins.

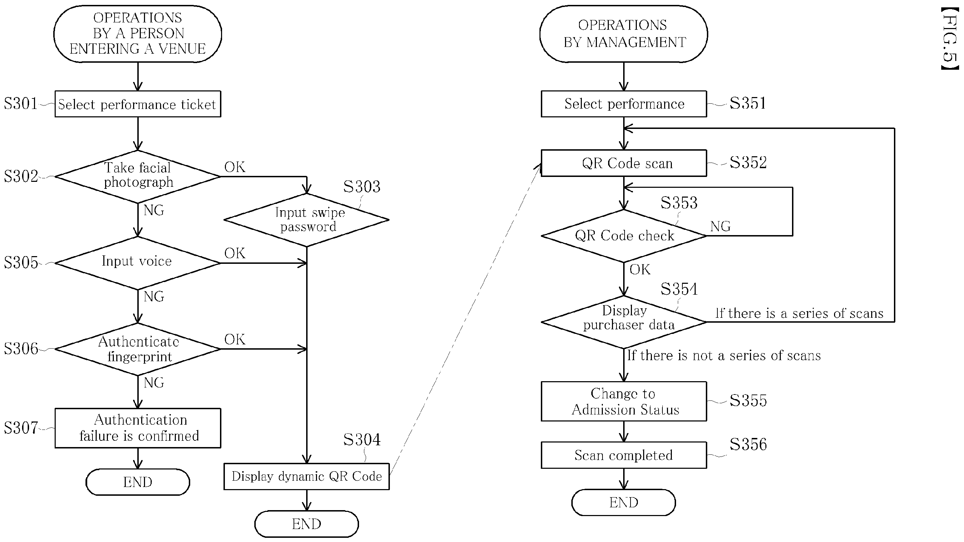

FIG. 5 is a flow chart describing a venue admission process or re-admission process, and the flow chart on the left side shows a specific example of registration just before entering an event venue. Upon arriving at the event venue, the user A selects an electronic ticket for the performance from the My Ticket List screen of the user terminal 3 (S301). After the electronic ticket is correctly displayed, the user A takes a photo of himself/herself using a camera in the user terminal 3, records the image data (S302), and inputs the swipe password set in step S110 (S303).

The server 2 compares the facial data that the user A previously registered with the facial data that the user A has just registered, and if it determines that the two data match, it issues a unique code 5 formed from a QR Code (Registered Trademark) that appears on a screen of a dedicated application of the user terminal 3 (S304). The code issuer is rapidly executed in the server 2, enabling the unique code 5 to be displayed on the screen of the user terminal 3 while the user A stands in line approaching the entrance gate.

It is conceivable that if the event venue is a dark environment such as a fireworks staging area or an environment exposed to direct sunlight such as a sports arena, it might not be feasible to take facial photographs, depending on the light surrounding the user terminal 3. In such cases, if the ticketing management system 1 does not provide authentication because of a failure of face recognition, then voice recognition is utilized (S305). The user A speaks to provide a voiceprint while standing in line approaching the entrance gate.

It is also conceivable that if the event venue is a noisy environment such as a university festival, it might not be feasible to authenticate with a voiceprint. In such cases, if the ticketing management system 1 cannot be relied upon to provide authentication because of a failure of voice recognition, then fingerprint recognition is utilized (S306). The user A provides a fingerprint scan while standing in line to the entrance gate.

The server 2 compares the voiceprint and fingerprint data previously registered by the user A with voiceprint and fingerprint data that the user A has just registered, and if the data are determined to match, then a unique code 5 is issued (S304) in the same manner as in the case of a successful face recognition. However, if any one of the facial photograph, voiceprint, or fingerprint fail to provide authentication, then authentication is determined to be incomplete (S307).

The ticketing management system 1 according to the present example utilizes at least two biometrics (e.g., a facial photograph, a voiceprint, and/or a fingerprint) as user biodata, and if a first biodata authentication (e.g., the face recognition of step S304) does not succeed, then a second biodata authentication (e.g., voice recognition of step S305) is carried out in the code issuer.

Accordingly, in the present example, regardless of the type of environment at the event venue, the admission process is not subject to error, because at least two authentication methods can be tried successively.

As shown in FIG. 1, the user authenticator is a means for authenticating the user A as the true ticket purchaser in a case where an attendant representing the sponsor B uses the code reader 4 to read the unique code displayed on the user terminal 3, and the server 2 determines that the code that is read is the correct unique code. A specific example of the user authenticator is illustrated on the right-hand side of the flow chart of FIG. 5 describing a venue admission process or re-admission process in the ticketing management system.

The attendant representing the sponsor B uses the code reader 4 (specific examples include a personal computer, a tablet terminal, etc.) in which is installed a dedicated reader application, and accesses the ticketing management system 1 to select in advance the performance in question (S351). The attendant uses a scanner of the code reader 4 to scan and read the unique code 5 formed from a QR Code (Registered Trademark) displayed on the user terminal 3 (S352). The server 2 checks the unique code 5 received from the code reader 4 (S353). If it is authenticated to be the correct unique code, then the purchaser data of the user A is transmitted. The transmitted purchaser data is displayed on the attendant's terminal (S354). In the case of a group entering a venue, these steps are repeated since it involves a series of scans.

If the user authenticator succeeds, then the server 2 changes the ticket to an "Admission Status" (S355), and the scanning process is completed (S356). Consequently, the electronic ticket has now been used, and the same ticket can no longer be used to gain admission to the venue.

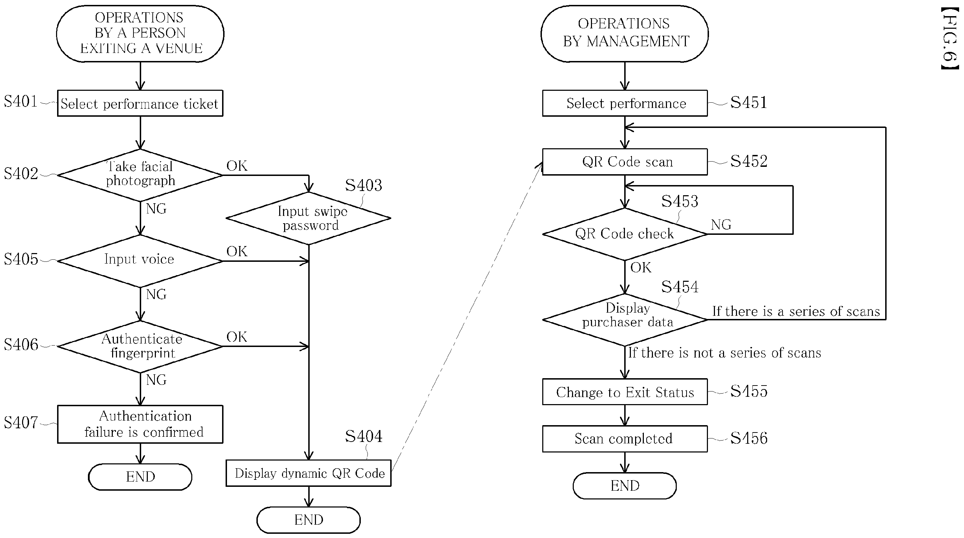

However, if the user A wishes to re-enter the venue after leaving, readmission is possible by implementing the procedures of the venue exit process illustrated in FIG. 6. Because the steps given in the flow chart of FIG. 6 (S401-S407, S451-S454, and S456) are basically identical to the steps illustrated in FIG. 5 (S301-S307, S351-S354, and S356), only the points that differ will be explained below.

In the venue exit process, once the user authenticator succeeds, the server 2 re-writes the Admission Status of the ticket to "Exit Status" (S455). The ticket that had been considered as being used is now a ticket for re-admission to the venue. The user A can gain admission to the venue again, following the same procedure as when entering the venue shown in FIG. 5.

When entering or re-entering the venue, the user A, who was authenticated by the user authenticator as being the true ticket purchaser, is permitted to enter the event venue. The attendant may open and close the entrance gate manually, or the operation of opening and closing the gate may be done mechanically, by notifying an automated ticket gate apparatus of the results of the user authenticator.

The age, gender, as well as a facial photograph of the user A are included in the purchaser data that are displayed to the attendant in step S354 in FIG. 5. Thus, the ticketing management system 1 of the present example also enables the attendant to visually authenticate the user A. Conversely, in the case of event venues where there is no need for visual authentication with a facial photograph, the results of the user authenticator may be mechanically coordinated with opening and closing of the gate.

It is understood from the above explanation that the present invention authenticates the ticket as a legitimately purchased ticket, and authenticates the person who appears at the entrance gate as indeed being the purchaser of the ticket. This is accomplished when the user A uses the user terminal 3 to provide his/her own biometrics and displays a unique code 5 together with an electronic ticket that has been purchased, and when the sponsor B uses the code reader 4 to read the unique code 5.

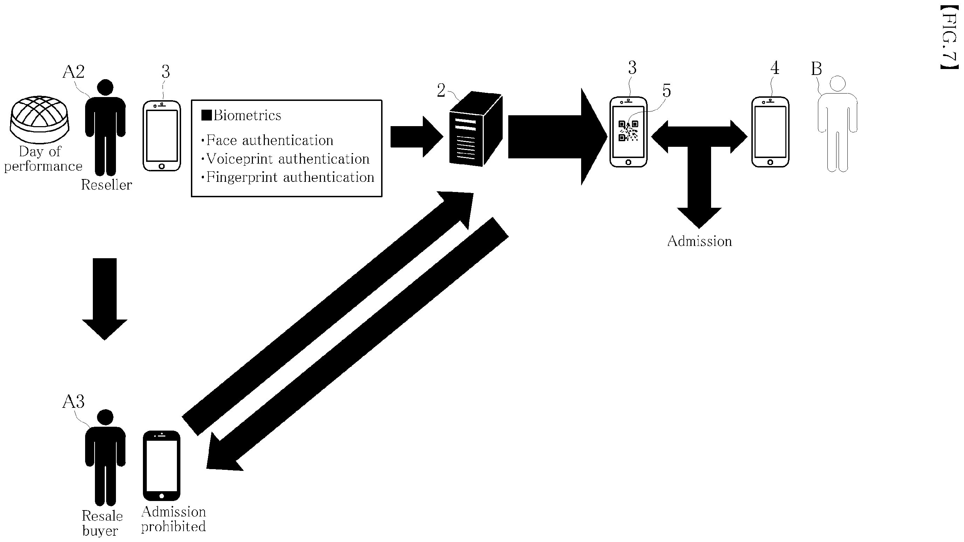

Therefore, as shown in FIG. 7, according to the present invention, if the user terminal 3 is wrongfully resold by a reseller user A2 to a resale buyer user A3, the code issuer determines that there is not a match between the previously recorded biodata and the biodata recorded at the event venue, and therefore does not issue a unique code 5, making it possible to prevent wrongful entry.

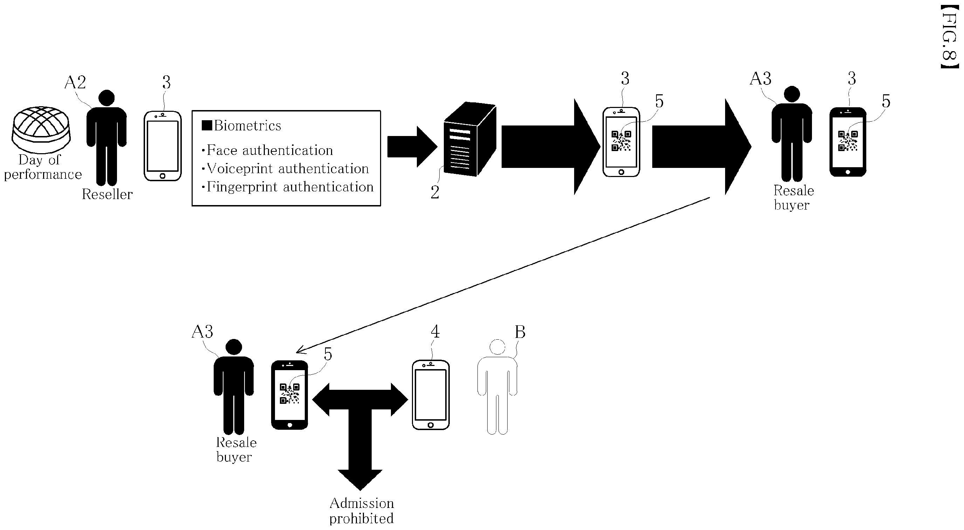

In particular, the ticketing management system 1 of the present example employs a dynamic QR Code (Registered Trademark) as the unique code 5 that automatically modifies the content of the unique code 5 by renewing it every 3 seconds, for example. Therefore, as shown in FIG. 8, according to the present example, after implementing the user authenticator at an event venue, if an image of the unique code 5 is wrongfully forwarded from a terminal of the reseller user A2 to a terminal of the resale buyer user A3, the QR Code (Registered Trademark) changes after 3 seconds to a different code in the server 2, making it possible for the user authenticator to determine that it is not the correct unique code.

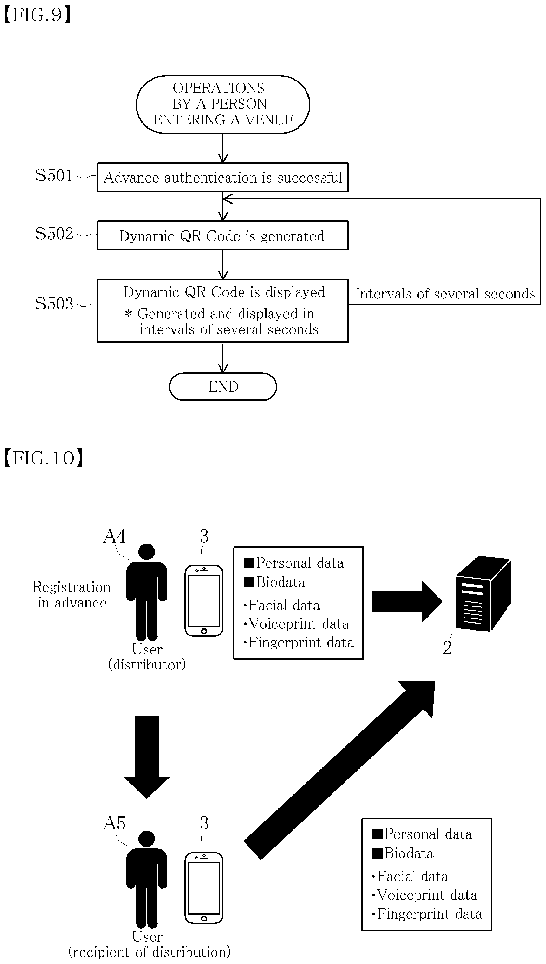

FIG. 9 is a flow chart illustrating the process of modifying the unique code 5 for each predetermined interval of time. Assuming that biodata have been successfully authenticated in advance (S501) in the user authenticator of the server 2, a QR Code (Registered Trademark) is generated (S502). The initial QR Code (Registered Trademark) is displayed in the user terminal 3, but the content of this code is altered at intervals of several seconds, for example. The generation and display of subsequent QR Codes (Registered Trademark) are repeated (S503).

In the ticketing management system 1 of the present example, the server 2 has a unique code modifier configured to modify the content of the unique code 5 for each predetermined interval of time.

Thus, according to the present example, it is possible to prevent wrongful transfer of an image of the unique code 5 to another person at an event venue.

According to the present invention described above, the user A does not need to register or compare a facial photograph at the entrance gate, and is able to utilize the time that lapses until reaching the entrance gate to activate the code issuer in advance and to display the unique code 5 on the user terminal 3. Therefore, even if highly reliable biometrics are employed, the user no longer needs to stand and wait, thus enabling an efficient admission process. The sponsor B is able to start the performance on time, because ticket collecting effort and time are reduced, and it is also possible to reduce personnel expenses by reducing the number of attendants.

Moreover, because the present invention makes it possible to display electronic tickets on a device such as a Smart Phone that is typically carried at all times, there is no risk that the user A will forget the ticket on the day of an event, as is the case with conventional paper tickets. In addition, according to the present invention, there is no need to input an ID composed of letters and numerals in the authentication process, nor is there any need for the user A to remember these letters and numerals, so there is no longer any risk of forgetting an ID or password, as is the case with conventional paper tickets.

FIG. 10 is a drawing illustrating a distribution function in the ticketing management system according to the present example. A distribution function is a function that makes it possible to correctly distribute all or part of a purchased ticket from a dealer user A4 to a recipient user A5. The user A5, who receives distribution of the ticket in advance, registers his/her biodata such as facial photo, voiceprint, fingerprint, etc. using the same method as the user A4. This makes it possible to enter, leave, and re-enter the event venue.

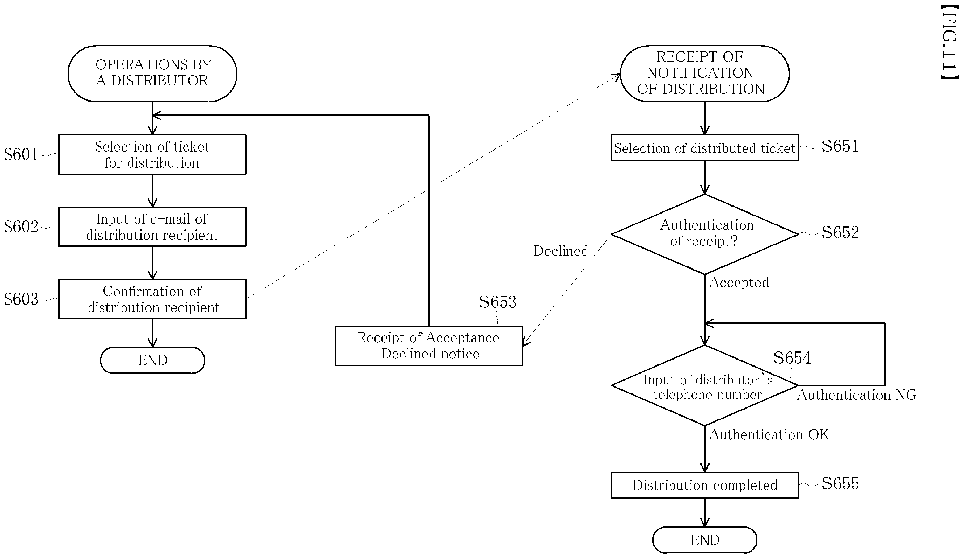

FIG. 11 is a flow chart illustrating the distribution process in the ticketing management system according to the present example. The user A4 selects an electronic ticket that he/she wishes to distribute, making the selection from the screen of the My Ticket List displayed on the user terminal 3 (S601). After that, the user A4 inputs the mobile phone number of the recipient user A5 from an input screen (S602), so as to confirm the distribution recipient (S603).

The user A5 receives an e-mail on his/her mobile phone with a distribution notification, selects the electronic ticket distributed by the user A4 on a screen (S651), and decides whether to accept or declines receipt of the electronic ticket (S652). If the user A5 declines, then a Receipt Declined e-mail is sent to the user A4 (S653). If the user A5 accepts, then he/she inputs the telephone number of the dealer user A4 (S654), and if the correct number has been input, then authentication succeeds, and the distribution process is completed (S655). It should be noted that step S651 is not limited to electronic mail, and SMS (Short Message Service) authentication may also be utilized.

In the ticketing management system 1 of the present example, the server 2 has a distributor configured to distribute an electronic ticket to a specified user who has been completely authenticated in advance.

Thus, according to the present example, it is possible to distribute a concert ticket to a friend if it is inconvenient to meet the friend to give him/her the ticket. Moreover, if a group representative has purchased a plurality of tickets, then the tickets can be distributed to the group members after purchase.

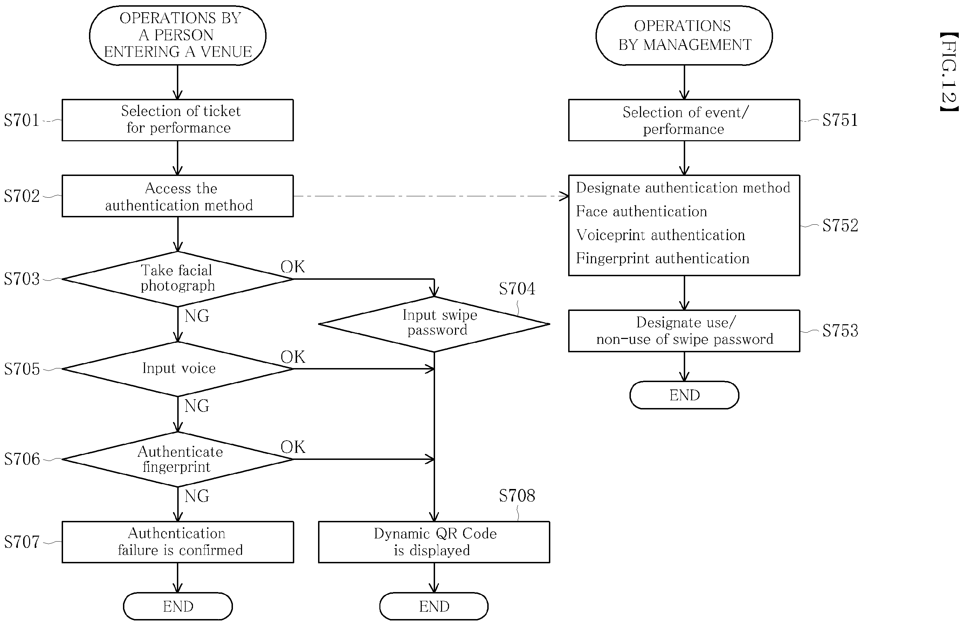

According to FIG. 5 described above, an example was given in which the biometrics were used in the following sequence: face recognition, voice recognition, then fingerprint scan. However, the ticketing management system 1 of the present example has a function whereby the sponsor designates the authentication method by selecting from a menu. FIG. 12 is a flow chart illustrating this process.

An attendant representing the sponsor B uses the code reader 4 (specific examples include a personal computer, a tablet terminal, etc.) to access the ticketing management system 1 to select a performance (S751) and to select from a menu an authentication method appropriate to the venue and to designate it (S752). In step S752, the type of biodata authentication can be selected as desired from a plurality of biodata authentication methods that are displayed, and the sequence of the biodata authentication can be designated, such as face recognition, voice recognition, then fingerprint scan (Pattern 1), face recognition, voice recognition, then fingerprint scan, face recognition, then voice recognition (Pattern 2), and the like. Whether or not a swipe password is used is designated by selecting either "Use" or "Do not use" (S753).

When the user A selects an electronic ticket for a performance from a screen displaying the My Ticket List on the user terminal 3 (S701), the server 2 accesses the authentication method that was designated in advance by the sponsor B (S702). For example, if the sponsor B has designated Pattern 1, then the biodata authentication is executed in the sequence of S703, S705, and S706, as shown in FIG. 12. If the sponsor B has designated Pattern 2, then the biodata authentication is executed in the sequence of fingerprint scan, face recognition, then voice recognition, which differs from FIG. 12.

If the sponsor B wishes, voice recognition can be excluded, so that only two authentication methods are selected: face recognition and fingerprint recognition. For example, in an environment such as a ski resort where water adheres to the screen of the user terminal 3 due to falling snow, fingerprint recognition is excluded, and only two authentication methods are selected: face recognition and voice recognition.

In step S704, input is required only in cases where the sponsor B has selected the designation "Use" for the swipe password. If the designation "Do not use" is selected, then step S704 is skipped. If any of the above authentications fail, then authentication is determined to be incomplete (S707). If any of the authentications succeed, then a unique code 5 formed from a QR Code (Registered Trademark) is displayed on the user terminal 3 (S708).

In the ticketing management system 1 of the present example, the server 2 has an authentication method designator configured to select and designate the type and/or sequence of the biometrics.

Thus, according to the present example, it is possible for the sponsor B, who is familiar with the environmental conditions of the venue, to designate the authentication methods that are most appropriate to the venue, combining a plurality of user biodata in the desired manner.

Instead of using the facial photograph initially registered by user A continually for many years, the ticketing management system 1 of the present example has a function for updating the biodata of the user A when the user A registers facial data at the event venue and the user authenticator successfully authenticates the biodata.

Thus, in the ticketing management system 1 of the present example, the server 2 has an automatic updater configured to update the user biodata that was previously registered and that had been successfully authenticated by the user authenticator to the most recent data when the user authenticator has successfully authenticated the user biodata.

Accordingly, even if there are changes in user A's head hair, facial hair, make-up, eyeglasses, cap, age, etc., the accuracy of facial recognition us constantly supported by automatic updates, so there is no longer any time and effort needed for manual updates. The sponsor B can also reduce the risk of errors in facial recognition arising from the passage of time.

The following program is installed in the server 2 of the ticketing management system 1 of the present example described above.

The program according to the present invention installed in a server 2 of a ticketing management system 1 is a non-transitory storage that stores a program for authenticating an electronic ticket, comprising:
issuing a unique code 5 when user biodata previously registered by a user A is compared with biodata registered by a user at a venue and a match is found between them, and
authenticating the user as the true ticket purchaser by using the code reader 4 to read the unique code 5 displayed on the user terminal 3.

Examples of steps comprising the code issuing step are steps S109, Sill, and S112 in FIG. 2 and S302-S306 in the flow chart of FIG. 5. Examples of steps comprising the authentication step are steps S351-S356 in the flow chart of FIG. 5.

The present invention is not limited to the above-described example, and the preferred embodiment may, of course, be advantageously modified within the scope of the technical ideas recited in the claims.

For example, in the above example, a user's face, voice, and fingerprint data were registered as user biodata, but a variety of user biodata can be used in the present invention, such as physical features (passive data) or behavioral characteristics (active data) of an individual.

Specifically if physical features are used, they are not limited to face, voice, and fingerprint data, but an authentication method may also use retinal, iris, or blood vessel patterns. If behavioral characteristics are used, then the authentication method may use blinking, handwriting (contour of writing samples, changes in pressure of the writing instrument), and lip movement (movement of the lips while speaking).

The server may also have a variety of functions that have not been described in the foregoing example. Such functions may include a function that informs a user by e-mail that the date and starting time of an event is approaching, a function that coordinates lottery processing and seating processing performed by the ticket sales company, a function that coordinates credit card payment settlement processing, and a function that displays points to the user together with the history of tickets purchased in the past. If these functions are installed in the server, the user is able to use a single user terminal to take care of almost all actions required when using tickets.

By using a GPS function installed in the user terminal, the server may be configured to detect user location data at the event location, in order to analyze the state of the flow of the queue up to the entrance gate, and to facilitate an efficient admission process.

This function makes it possible for the event sponsor to reduce the risk of a performance being delayed due to an inability to efficiently direct the flow of a queue. This function further enhances the effect of preventing false authentications, because it is possible to determine if the user has employed biometrics at the event venue, and at what location at the event venue the user has done that. In addition, there is no longer any loss of time due to people taking circuitous routes to get to the entrance gate, because when the user arrives at the event venue, he/she is efficiently guided to the entrance gate most appropriate to the purchased ticket.

If GPS position data in the user terminal is used for the purpose of restricting an area where biodata authentication is performed immediately prior to entering the venue, the code issuer in the server matches the biodata previously registered by the user with the biodata registered at the venue, and the code issuer may be configured so that the unique code is issued if the position data in the user terminal is within a predetermined area.

Specific information such as a seat number was displayed from the beginning on a conventional paper ticket, but the present system may be configured so as not to display this data on the user terminal until just before being admitted to the venue.

Concert seats are typically ranked as Premium Seat, Special Seat, etc., but even tickets with identical ranking, such as good seats in the front row, are easily subject to resale at exorbitant prices. The present invention is able to reliably prevent wrongful resale in the system, but if a configuration is used in which a user is informed of the seat number and approximate location only, and a specific seat number is not displayed on the user terminal until the user enters the event venue, then it is possible to prevent the user from having any motivation to try a wrongful resale.

The foregoing example described a case in which the sponsor selects the authentication method in advance, but the present invention may be configured in such a manner that the user terminal obtains environmental information regarding the event venue (e.g., the amount of light, volume of sound, weather on the day of the event, etc.), and the user terminal application selects the most appropriate authentication method, depending on the environmental information obtained.

In addition, the foregoing example described a case using a QR Code (Registered Trademark) as the unique code, but the present invention is not limited thereto. In the present invention, the unique code transmitted to the user terminal may be another 2-dimensional code, a bar code, or a code formed from a combination of numerals and letters.

### EXPLANATION OF THE REFERENCE SYMBOLS

| | |
|---|---|
| 1 | Ticketing management system |
| 2 | Server |
| 3 | User terminal |
| 4 | Code reader |
| 5 | Unique code |

## Claims

1. A ticketing management system comprising a server, a user terminal, and a code reader to enable an authentication of electronic tickets, wherein the server comprises:
a code issuer configured to compare user biodata registered in advance with user biodata registered at a venue and issues a unique code when there is a match between them; and
a user authenticator configured to operate the code reader to read the unique code displayed on the user terminal to thereby authenticate the user as the true ticket purchaser.

2. The ticketing management system according to claim 1, wherein at least two types of biodata are used as the user biodata, and if a first biodata authentication does not succeed, then a second biodata authentication is carried out in the code issuer.

3. The ticketing management system according to claim 1 or claim 2, wherein the server has a authentication method designator configured to select and set a type and/or sequence of the biodata authentication.

4. The ticketing management system according to any one of claims 1-3, wherein the server has a unique code modifier configured to modify a content of the unique code for each predetermined interval of time.

5. The ticketing management system according to any one of claims 1-4, wherein the server has a distributor configured to distribute an electronic ticket to a specified user who has been completely authenticated in advance.

6. The ticketing management system according to any one of claims 1-5, wherein the server has an automatic updater configured to update the user biodata which was previously registered and had been successfully authenticated by the user authenticator, to the most recent user biodata when the user authenticator has successfully authenticated the user biodata.

7. The ticketing management system according to any one of claims 1-6, wherein the server has an account manager for electronic ticket payment and settlement, together with an external system connector configured to receive ticket data from the external system through which the user purchased the ticket.

8. The ticketing management system according to any one of claims 1-7, wherein the server has a display controller configured to display on a user terminal historical data on electronic tickets that the user has previously purchased.

9. A non-transitory storage that stores a program for authenticating an electronic ticket installed in the server used in the ticketing management system according to any one of claims 1-8, the program being executed to implement:
issuing a unique code when user biodata previously registered is compared with user's biodata registered at a venue and a match is found between them; and
authenticating the user as the true ticket purchaser by using the code reader to read the unique code displayed on the user terminal.
